# EUROPÄISCHE PATENTSCHRIFT

(11) **EP 2 284 040 B1**
(45) Veröffentlichungstag und Bekanntmachung des Hinweises auf die Patenterteilung: **16.05.2012**
(21) Anmeldenummer: 09010499.3
(22) Anmeldetag: 14.08.2009
(51) Int. Cl.: B60Q 1/14

(54) **Verfahren zum Steuern der Beleuchtungsstärke eines von einer Fahrzeugbeleuchtungsanlage ausgesendeten Lichtbündels**
Method for controlling the lighting strength of a light beam emitted by a vehicle lighting assembly
Procédé de commande de la puissance d'éclairage d'un faisceau lumineux émis par une installation d'éclairage de véhicule

(43) Veröffentlichungstag der Anmeldung: 16.02.2011
(73) Patentinhaber: Micronas GmbH, 79108 Freiburg (DE)
(72) Erfinder: Bauer, Marco, 79258 Hartheim (DE)
(74) Vertreter: Koch, Bertram

(56) Entgegenhaltungen:
- CN-Y- 2 695 292
- DE-A1- 19 916 183
- DE-A1-102004 027 532
- DE-A1-102008 008 868
- JP-A- 61 030 438
- JP-A- 2004 098 819
- US-A- 5 847 661
- US-B1- 7 005 977

## Beschreibung

Die Erfindung betrifft ein Verfahren zum Steuern der Beleuchtungsstärke eines von mindestens einer Fahrzeugbeleuchtungsanlage ausgesendeten Lichtbündels, wobei von einem ersten Fahrzeug ein erstes Lichtbündel ausgesendet wird, in dessen Abstrahlbereich ein zweites Fahrzeug angeordnet ist, das mindestens ein zweites Lichtbündel aussendet, wobei in dem ersten Fahrzeug ein Positionswert für die Position des ersten Fahrzeugs und in dem zweiten Fahrzeug ein Positionswert für die Position des zweiten Fahrzeugs bereitgestellt werden, wobei ein Datensatz generiert wird, der zumindest den Positionswert des ersten Fahrzeugs umfasst, wobei der Datensatz von dem ersten Fahrzeug zu dem mindestens einen zweiten Fahrzeug übertragen wird, wobei in dem zweiten Fahrzeug aus dem Positionswert des ersten Fahrzeugs und dem Positionswert des zweiten Fahrzeugs der Abstand zwischen dem ersten Fahrzeug und dem zweiten Fahrzeug bestimmt wird, und wobei die Beleuchtungsstärke des mindestens einen Lichtbündels in Abhängigkeit von dem ermittelten Abstand eingestellt wird.

Ein derartiges Verfahren, bei dem Fahrzeugbeleuchtungsanlagen automatisch gesteuert werden, ist aus DE 100 27 418 A1 bekannt. Mehrere räumlich zueinander benachbarte Fahrzeug sind jeweils mit einem Navigationssystem ausgestattet, das einen Satellitenempfänger und einen Satellitensender aufweist, die zur Bestimmung der Fahrzeugposition des betreffenden Fahrzeugs mit GPS-Satelliten zusammenwirken. In Abhängigkeit von den Positionen der einzelnen Fahrzeuge werden die Beleuchtungsanlagen der Fahrzeuge gesteuert, wobei z.B. das Fernlicht rechtzeitig ausgeschaltet wird. Die Übertragung der in den benachbarten Fahrzeugen ermittelten Positionswerte für die Fahrzeugposition über den Satellitensender zu einem Fahrzeug, dessen Beleuchtungsanlage gesteuert werden soll, ist jedoch mit einem gewissen Aufwand verbunden.

Aus DE 10 2008 008 868 A1 ist ferner ein gattungsfremdes Verfahren bekannt, bei dem die Beleuchtungsanlagen mehrerer räumlich zueinander benachbarter Fahrzeuge jeweils Licht aussenden, das mit einer dem betreffenden Fahrzeug eindeutig zugeordneten Frequenz blinkt. In einem ersten Fahrzeug werden mit Hilfe eines Photosensors auf der Grundlage der Frequenz entgegenkommende Fahrzeuge ermittelt, deren Beleuchtungsanlage eine überhöhte Lichtmenge abgibt. Sobald ein solches Fahrzeug ermittelt wird, sendet das erste Fahrzeug mit einer der Frequenz des ermittelten Fahrzeugs zugeordneten Frequenz Licht über seine Scheinwerfer aus. Dieses wird von den entgegenkommenden Fahrzeuge mit Hilfe von Photosensoren empfangen und anhand der Frequenz des empfangenen Lichts wird in dem entgegenkommenden Fahrzeug ermittelt, ob dessen Beleuchtungsanlage eine überhöhte Lichtmenge abgibt. Erforderlichenfalls wird dann die Lichtmenge dieses Fahrzeugs verringert. Das Messsignal des Photosensors ist von verschiedenen Faktoren abhängig, z.B. ob die entgegenkommenden Fahrzeuge mit Abblendlicht oder Fernlicht fahren, oder ob Fremdlicht, wie z.B. Licht einer Straßenbeleuchtung auf den Photosensor auftrifft. Das Verfahren ist deshalb relativ störanfällig.

Aus der DE 10 2004 0275 32 A1, der US 5 847 661 A, der DE 199 16 183 A1, der DE 10 2008 008868 A1, der US 700 5 977 B, der JP 2004 0988 19 A, der JP 61 030438 A und der CN 2 695 292 Y sind Vorrichtungen und Verfahren zur Übertragung

Aufgabe der vorliegenden Erfindung ist es, ein Verfahren der eingangs genannten Art anzugeben, das auf einfache Weise durchzuführen ist und eine zuverlässige Steuerung der Beleuchtungsstärke eines von mindestens einer Fahrzeugbeleuchtungsanlage ausgesendeten Lichtbündels ermöglicht.

Diese Aufgabe wird dadurch gelöst, dass zum Übertragen des Datensatzes das erste Lichtbündel entsprechend dem Datensatz moduliert wird, und dass das so erhaltene Modulationssignal von dem mindestens einen zweiten Fahrzeug empfangen und demoduliert wird.

In vorteilhafter Weise wird bei dem erfindungsgemäßen Verfahren die vorhandene Fahrzeugbeleuchtungsanlage dazu genutzt, die Position des ersten Fahrzeugs optisch zu dem zweiten Fahrzeug zu übertragen, um die Beleuchtungsstärke mindestens eines Lichtbündels der beiden Fahrzeuge zu steuern. Somit kann eine zusätzliche Sendeeinrichtung eingespart werden. Das Verfahren ist daher einfach und kostengünstig durchführbar.

Bei einer bevorzugten Ausgestaltung des Verfahrens wird eine von dem Positionswert des ersten Fahrzeugs abhängige Redundanzinformation erzeugt, in den Datensatz aufgenommen und zu dem zweiten Fahrzeug übertragen,
a) wobei in dem zweiten Fahrzeug die Picusibilität des von diesem Fahrzeug empfangenen Datensatzes anhand der darin enthaltenen Redundanzinformation überprüft wird,
b) wobei bei plausiblem Datensatz der Abstand zwischen dem ersten Fahrzeug und dem zweiten Fahrzeug bestimmt und die Beleuchtungsstärke des zweiten Lichtbündels in Abhängigkeit von dem ermittelten Abstand eingestellt wird, und
c) wobei bei nicht plausiblem Datensatz die Übertragung des Datensatzes wiederholt oder in dem ersten Fahrzeug eine weiterer Datensatz erzeugt und zu dem betreffenden zweiten Fahrzeug übertragen wird, und wobei danach Schritt 2a) wiederholt und dann Schritt 2b) oder 2c) durchgeführt wird.

Das Verfahren arbeitet dadurch noch zuverlässiger.

Das Lichtbündel wird bevorzugt derart moduliert, dass die Modulation für das menschliche Auge nicht sichtbar ist. Das kann beispielsweise dadurch erreicht werden, dass die Modulation nur in einem relativ schmalen Zeitfenster und/oder mit hoher Frequenz durchgeführt wird.

Besonders vorteilhaft ist, wenn das Lichtbündel pulsphasenmoduliert wird. Bei der Pulsphasenmodulation ändert sich das das Puls-Pausenverhältnis einer Periode nicht, weshalb die Beleuchtungsstärke eines damit angesteuerten Leuchtmittels der Fahrzeugbeleuchtungsanlage als konstant wahrgenommen wird. Es ändert sich nur die Position eines Pulses innerhalb einer Periode, nicht aber die Pulsdauer. Als Leuchtmittel wird bevorzugt eine Halbleiterlichtquelle verwendet, insbesondere eine Leuchtdiode.

Bei einer bevorzugten Ausgestaltung der Erfindung wird der Datensatz mittels eines Codemultiplexverfahrens zwischen den Fahrzeugen übertragen. Dadurch können mehrere Fahrzeuge gleichzeitig über ein von Ihnen jeweils ausgesendetes Lichtbündel Datensätze zu mindestens einem, im Abstrahlbereich dieser Lichtbündel angeordneten weiteren Fahrzeug übertragen. Die in den Lichtbündeln enthaltenen Datensätze können von dem mindestens einen weiteren Fahrzeug beispielsweise mittels eines geeigneten optischen Empfängers empfangenen und dann voneinander getrennt werden.

ZweckmäBigerweise wird in jedem Fahrzeug jeweils eine das Fahrzeug identifizierende Kennung gespeichert, wobei die von den einzelnen Fahrzeugen ausgesendeten Datensätze jeweils die Kennung des den Datensatz sendenden Fahrzeugs enthalten, wobei beim Empfangen eines Datensatzes die Kennung aus dem Datensatz extrahiert und mit der Kennung des den Datensatz empfangenden Fahrzeuges verglichen wird, und wobei die Beleuchtungsstärke des Lichtbündels nur dann verändert wird, wenn die miteinander verglichenen Kennungen voneinander abweichen. Dadurch wird vermieden, dass ein von einem Fahrzeug ausgesendetes Lichtbündel, das an einem Hindernis zu demselben Fahrzeug zurückreflektiert wird, zur Steuerung dessen Beleuchtungsanlage verwendet wird. In besonderen Situationen, wie z.B. bei Nebel, kann es jedoch sinnvoll sein, das Aussenden der Kennung und/oder das Vergleichen der empfangenen Kennung mit der Kennung des den Datensatz empfangenden Fahrzeuges zu deaktivieren, um eine Selbstblendung zu vermeiden.

Bei einer vorteilhaften Ausführungsform der Erfindung wird in dem mindestens einen zweiten Fahrzeug nach dem Bestimmen des Abstands ein Antwort-Datensatz generiert, der zumindest den Abstand und/oder einen von dem Abstand abängigen Befehlscode umfasst, wobei das erste Fahrzeug im Abstrahlbereich des zweiten Lichtbündels angeordnet ist und der Antwort-Datensatz von dem zweiten Fahrzeug zu dem ersten Fahrzeug übertragen wird, indem das zweite Lichtbündel entsprechend dem Antwort-Datensatz moduliert und das Modulationssignal von dem ersten Fahrzeug empfangen und demoduliert wird, und wobei die Beleuchtungsstärke des ersten Lichtbündels in Abhängigkeit von dem ermittelten Abstand und/oder dem Befehlscode eingestellt wird. Der Abstand kann also auch in einem anderen Fahrzeug ermittelt werden als dem Fahrzeug, bei dem die Beleuchtungsstärke des Lichtbündels in Abhängigkeit von dem Abstand gesteuert wird. Selbstverständlich kann in Abhängigkeit von dem ermittelten Abstand auch die Beleuchtungsstärke des Lichtbündels des zweiten Fahrzeugs gesteuert werden.

Besonders vorteilhaft ist, wenn in dem ersten Fahrzeug eine dieses identifizierende Kennung gespeichert wird, wenn der vom ersten Fahrzeug an das mindestens eine zweite Fahrzeug übertragene Datensatz diese Kennung enthält, wenn die Kennung in dem mindestens einen zweiten Fahrzeug aus dem empfangenen Datensatz extrahiert und in den Antwort-Datensotz übernommen wird, wenn der Antwort-Datensatz danach an das erste Fahrzeug übertragen wird, wenn die Kennung in dem ersten Fahrzeug aus dem Antwort-Datensatz extrahiert und mit der Kennung des ersten Fahrzeugs verglichen wird, und wenn bei einer Übereinstimmung der Kennungen die Beleuchtungsstärke des ersten Lichtbündels in Abhängigkeit von dem in dem Antwort-Datensatz enthaltenen Abstand und/oder Befehlscode eingestellt wird. Es wird also nur jeweils das Lichtbündel des jeweiligen Fahrzeugs gesteuert, für den der Abstand ermittelt wurde. Datensätze, die für andere Fahrzeuge bestimmt sind, bewirken dagegen keine Änderung der Beleuchtungsstärke des Lichtbündels des zuerst genannten Fahrzeugs.

Bei einer bevorzugten Ausgestaltung der Erfindung wird in mindestens einem Fahrzeug die Zeitdauer gemessen, die vergangen ist seit das betreffende Fahrzeug zuletzt einen Datensatz empfangen hat, aufgrund dessen die die Beleuchtungsstärke des von diesem Fahrzeug ausgesendeten Lichtbündels auf einen Wert eingestellt wurde, der kleiner ist als ein Beleuchtungsstärkes-Maximalwert, wobei die gemessene Zeitdauer mit einer vorbestimmten Verzögerungszeit verglichen wird, und wobei die Beleuchtungsstärke des Lichtbündels erhöht wird, wenn die Zeitdauer mit der Verzögerungszeit übereinstimmt oder größer ist als diese. Falls also während einer bestimmte Zeitdauer kein anderes Fahrzeug in der Nähe ist, wird die Beleuchtungsstärke des Lichtbündels automatisch erhöht, vorzugsweise auf den Beleuchtungsstärke-Maximalwert.

Bei einer einfach durchzuführenden Ausgestaltung der Erfindung wird das erste Lichtbündel auf Fernlicht eingestellt, wenn der Abstand größer ist als ein vorbestimmter Grenzwert, und das erste Lichtbündel wird auf Abblendlicht eingestellt, wenn der Abstand kleiner ist als der vorbestimmte Grenzwert. Selbstverständlich ist es aber auch möglich, dass die Beleuchtungsstärke des Lichtbündels in mehr als zwei Stufen zu verstellen. In diesem Fall können den einzelnen Stufen unterschiedliche Grenzwerte zugeordnet sein. Gegebenenfalls kann die Beleuchtungsstärke des Lichtbündels auch stufenlos in Abhängigkeit von dem ermittelten Abstand angepasst werden.

Nachfolgend ist ein Ausführungsbeispiel der Erfindung an Hand der Zeichnung näher erläutert. Es zeigt
- Fig. 1: eine Fahrbahn, auf der einander entgegenkommende Fahrzeuge fahrern, deren Fahrzeugbeleuchtungsonicgen Lichtbündel aussenden, die schemotisch als Lichtstrahlen dargestellt sind, und
- Fig. 2: ein Blockschaltbild einer Beleuchtungsanlage eines Fahrzeugs.

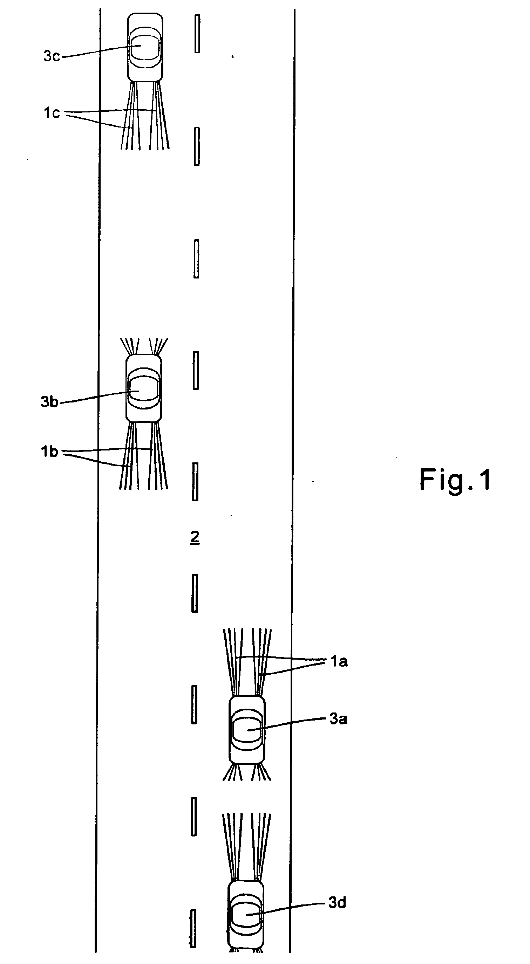

Bei einem Verfahren zum Steuern der Beleuchtungsstörken von Lichtbündeln 1a, 1 b, die von den Fahrzeugbeleuchtungsanlogen mehrerer auf einer Fahrbahn 2 einander entgegenkommender Fahrzeuge 3a, 3b, 3c wird von einem ersten Fahrzeug 3a ein erstes Lichtbündel 1a und von zwei zweiten Fahrzeugen 3b, 3c jeweils ein zweites Lichtbündel 1b, 1c ausgesendet. Wie in Fig. 1 erkennbar ist, ist das erste Fahrzeug 3a im Abstrahlbereich jedes der beiden zweiten Lichtbündel 1b, 1 c und die beiden zweiten Fahrzeug 3b, 3c befinden sich im Abstrahlbereich des ersten Lichtbündels 1a.

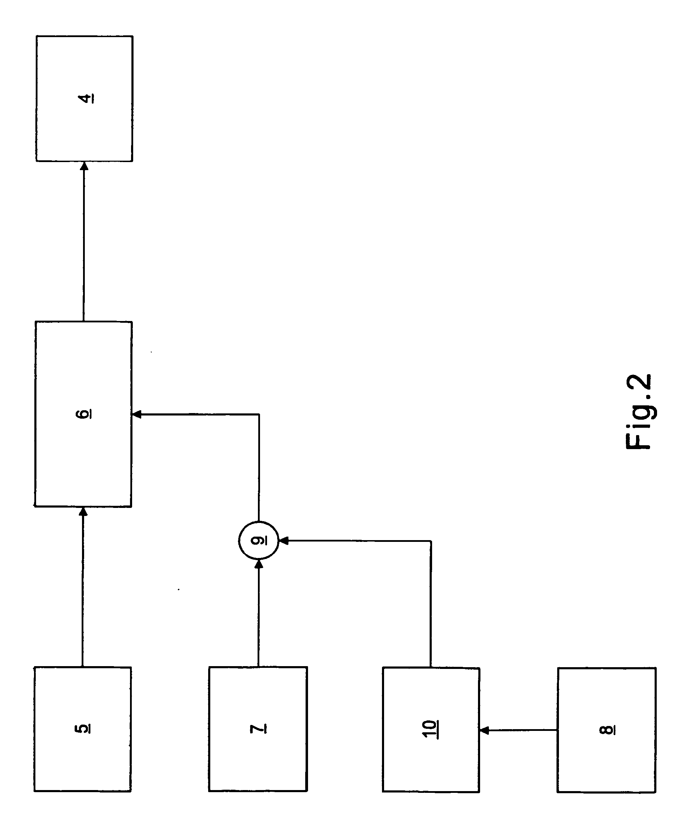

Wie in Fig. 2 zu sehen ist, weisen die Fahrzeugbeleuchtungsanlagen als Leuchtmittel jeweils mindestens eine Leuchtdiode 4 auf, die jeweils mit Hilfe einer Pulsweitenmodulafionseinrichtung 5 angesteuert wird. Die Pulsweitenmodulationseinrichtung 5 stellt jeweils ein Ansteuersignal für die mindestens eine ihr zugeordnete Leuchtdiode 4 bereit, dessen Puls-Pausen-Verhältnis in Abhängigkeit von einem an einem Eingangsanschluss der Pulsweitenmodulationseinrichtung 5 anliegenden Beleuchtungsstärke-Steuersignal verändert werden kann. Das Beleuchtungsstärke-Steuersignal kann im einfachsten Fall ein Binärsignal sein, in Abhängigkeit von dem die Beleuchtungsstärke auf die Werte "Abblendlicht" und "Fernlicht" eingestellt wird. Es ist aber auch denkbar, dass das Beleuchtungsstärke-Steuersignal mehr als zwei unterschiedliche Werte annehmen kann, um die Beleuchtungsstärke in mehreren Stufen einzustellen. Dabei ist es sogar möglich, dass die Stufen so fein sind, dass beim Verstellen der Beleuchtungsstärke für das menschliche Auge der Eindruck entsteht, diese werde stufenlos verstellt.

Die Fahrzeuge 3a, 3b, 3c haben jeweils ein Navigationssystem, das einen in dem betreffenden Fahrzeug 3a, 3b, 3c angeordneten Sotellitenempfönger 8 aufweist, der in an sich bekannter Weise zur Bestimmung von Positionswerten für die Position des Fahrzeugs 3a, 3b, 3c mit mehreren, die Erde umkreisenden GPS-Satelliten zusammenwirkt. Mit Hilfe des Navigationssystems des ersten Fahrzeugs 3a wird ein Positionswert für die Position des ersten Fahrzeugs und mit Hilfe der Novigotionssysteme der zweiten Fahrzeuge 3b, 3c jeweils ein Positionswert für die Position des betreffenden zweiten Fahrzeugs 3b, 3c ermittelt. In dem ersten Fahrzeug 3a wird ein Datensatz generiert, der folgende weitere Daten beinhaltet
- eine dem ersten Fahrzeug 3a eindeutig zugeordnete Kennung, beispielsweise die Fahrgestellnummer des ersten Fahrzeugs 3a,
- den mit Hilfe des Navigationssystems ermittelten Positionswert des ersten Fahrzeugs 3a,
- eine Befehlssequenz für ein Fahrzeug, an das der Datensatz übermittelt werden soll,
- einen Bereich für Befehlsparameter,
- ein Statusinformation über den Zustand des ersten Fahrzeugs 3a (z. B. Status dessen Beleuchtungsanlage), und
- Daten für eine Redundanzprüfung, die in dem Fahrzeug, durchgeführt wird, an das der Datensatz übermittelt wird.

Der Datensatz des ersten Fahrzeugs 3a wird über das erste Lichtbündel 1 a zu den zweiten Fahrzeugen 3b, 3c übertragen. Die Fahrzeugbeleuchtungsanlage des ersten Fahrzeugs 3a hat zu diesem Zweck eine Pulsphasenmodulationseinrichtung 6, mittels der die Phasenlage der zur Ansteuerung der Leuchtdiode 4 vorgesehenen Pulse in Abhängigkeit von den im Datensatz enthaltenen Daten verändert werden kann. Die Pulsphasenmodulationseinrichtung 6 ist über eine in der Zeichnung nicht näher dargestellte Ansteuereinrichtung (zB. eine Endstufe) mit der mindestens einen Leuchtdiode 4 des Fahrzeugs verbunden. Die aus der Pulsphasenmodulationseinrichtung 6, der Ansteuereinrichtung und der Leuchtdiode 4 bestehende Anordnung wird nachstehend auch als Sender bezeichnet.

Jedes Fahrzeug 3a, 3b, 3c weist ferner mindestens einen optischen Empfänger auf, der für das Licht der Lichtbündel 1a, 1b, 1c empfindlich ist und mittels dem die auf ein Lichtbündel 1a, 1b, 1c aufmodulierten Daten eines anderen Fahrzeugs 3a, 3b, 3c empfangen werden können, wenn der optische Empfänger im Abstrahlbereich des Lichtbündels 1a, 1b, 1c angeordnet ist.

Der dem Lichtbündel 1a des ersten Fahrzeugs 3a aufmodulierte Datensatz wird mit Hilfe eines Codemultiplexverfahrens zu den zweiten Fahrzeugen 3b, 3c übertragen. Bei dem Codemultiplexverfahren werden mehrere Bits zu einem sogenannten Chip zusammengefasst, wobei ein Chip auch wieder den Wert "0" oder "1" annehmen kann. Der Wert "0" eines Chips lässt sich z. B. durch die Bitfolge "010101" repräsentieren, der Wert "1" durch "011101". Andere Reprösentationen sind denkbar. Durch die sequenzielle Übertragung der in dem Datensatzes enthaltenen redundanten Informationen in Form von aus mehreren Bits zusammengesetzten Chips wird eine höhere Übertragungssicherheit ermöglicht.

Zur Synchronisation des Senders des ersten Fahrzeugs 3a mit den Empfängern der zweiten Fahrzeuge 3b, 3c sendet der Sender des ersten Fahrzeugs 3a eine lange Pseudozufallszahlenfolge aus, welche jeweils aus mehr als 1000 Chips bestehen sollte. Theoretisch könnte der Sender dabei aus 2¹⁰⁰⁰ verschiedenen möglichen Pseudozufallszahlenfolgen auswählen, jedoch müssen die Codes mehrerer verschiedener Sender so wenig wie möglich miteinander in Korrelation stehen, um sie gut voneinander trennen zu können, beispielsweise beim Auftreten von Störungen.

Dafür eignet sich nur eine relativ kleine Anzahl von Pseudozufallszahlenfolgen, welche als "Gold Codes" bezeichnet werden. Jedes Fahrzeug 3a, 3b, 3c kennt alle möglichen Gold Codes. Diese können beispielsweise in einem Datenspeicher des betreffenden Fahrzeugs 3a, 3b, 3c abgelegt sein. Welchen Gold Code das erste Fahrzeug 3a beim Senden benutzt, wird durch einen Zufallszahlengenerator bestimmt. Um die Wahrscheinlichkeit zu senken, dass sich zwei Fahrzeuge 3a, 3b, 3c begegnen, die den selben Gold Code verwenden, sollte dieser beim Sender regelmäßig, beispielsweise etwa alle 5 Minuten, gegen einen anderen zufällig gewählten Gold Code ausgetauscht werden.

Wie in Fig. 2 erkennbar ist, wird der zu verwendende Gold Code mit Hilfe eines Gold Code-Generators 7 in dem ersten Fahrzeug 3a erzeugt und mittels einer Addierglieds 9 zu dem von einem Datensatz-Generator 10 bereitgestellten Datensatz arithmetisch addiert. Das so erhaltene Summensignal wird zur Pulsphasenmodulation eines mit Hilfe einer Pulsweitenmodulationseinrichtung 5 erzeugten Pulsweitenmodulotions-Trögersignals verwendet. Mit diesem wird dann die mindestens eine Leuchtdiode 4 der Beleuchtungseinrichtung angesteuert.

Der von dem ersten Fahrzeug 3a ausgesendete Datenstrom wird von den Empfängern der zweiten Fahrzeuge 3b, 3c empfangen und mit Hilfe einer in den zweiten Fahrzeugen 3b, 3c vorgesehenen Vergleichseinrichtung fortlaufend mit den Chip-Sequenzen der bekannten Gold Codes verglichen. Beim Auftreten einer Übereinstimmung wird der betreffende Empfänger des zweiten Fahrzeugs 3b, 3c auf den Sender des ersten Fahrzeugs 3a synchronisiert. Sollten mehrere Gold Codes gleichzeitig erkannt werden, was der Fall ist, wenn gleichzeitig ein Datensatz mindestens eines weiteren Fahrzeugs 3d empfangen wird, so synchronisieren sich die Empfänger der zweiten Fahrzeuge 3b, 3c parallel aufjeden der empfangenen Gold-Codes separat, d. h. es werden mehrere, von unterschiedlichen Fahrzeugen 3a, 3d ausgesendete Datenströme gleichzeitig empfangen und ausgewertet.

Wenn ein Empfänger eines zweiten Fahrzeugs 3b, 3c auf einen Gold Code eines Datenstroms eingerastet ist, dann kennt er fortan auch dessen weiten Aufbau und kann damit alle folgenden Chips durch Vergleich eindeutig als 0 oder 1 identifizieren, selbst wenn sie nur gestört und damit nicht eindeutig aufgenommen werden können.

Da der Gold Code wie o. a. aber regelmäßig vom Sender des ersten Fahrzeugs 3a gewechselt wird, suchen die Empfänger der zweiten Fahrzeuge 3b, 3c im Hintergrund ständig den Datenstrom nach weiteren Korrelationen mit den bekannten Gold Codes ab. Die Gold Codes dienen nicht dazu, ein Fahrzeug 3a, 3b, 3c eindeutig zu identifizieren, sondern sollen es ermöglichen, die über die Lichtbündel mehrerer verschiedener Fahrzeuge 3a, 3d gleichzeitig empfangenen Informationen voneinander zu trennen. Die eindeutige Identifizierung der Fahrzeuge 3a, 3d ist mit Hilfe der in dem Datensatz abgelegten Kennung möglich.

Um Fehler in der Übertragung erkennen zu können, wird der empfangene Datenstrom einer zyklischen Redundanzprüfung unterworfen. Sender und Empfänger benutzen dazu ein beiden bekanntes, festgelegtes Generatorpolynom der Lange r. Einem Datencode-Rahmen werden vom Sender r-1 Nullen angehängt, damit der Empfänger eine Redundanzprüfung des Datenstroms ausführen kann. Die Redundanzprüfung kann mit Hilfe eines an sich bekannten Algorithmus erfolgen, beispielweise durch Polynomdivision.

Eine den einzelnen Fahrzeugen 3a, 3b, 3c, 3d eindeutig zugeordnete Kennung verhindert den Fall, dass sich zufölligerweise zwei Fahrzeuge 3a, 3b, 3c, 3d mit der gleichen Kennung begegnen. Es ist auch möglich, die Kennungen mit Hilfe eines ZufiJllsgenerotors zu erzeugen. Dann steigt aber die die Wahrscheinlichkeit einer solchen Begegnung.

Nachdem der Positionswert des ersten Fahrzeugs 3a an die zweiten Fahrzeuge 3b, 3c übertragen wurde und bei der Übertragung kein Fehler festgestellt wurde, wird die in dem empfangenen Datensatz enthaltene Kennung mit der Kennung des betreffenden zweiten Fahrzeugs 3b, 3c verglichen. Wird dabei eine Übereinstimmung festgestellt, wird der empfange Datensatz verworfen. Das entsprechende zweite Fahrzeug 3b, 3c wartet dann ab, bis das erste Fahrzeug 3a und/oder ein anderes im Empfangsbereich des zweiten Fahrzeugs 3b, 3c befindliches Fahrzeug einen neuen Datensatz sendet. Dieser wird dann wie vorstehend beschrieben in dem zweiten Fahrzeug 3b, 3c verarbeitet. -

Stimmt die in dem Datensatz enthaltene Kennung nicht mit der Kennung des betreffenden zweiten Fahrzeugs 3b, 3c überein, wird in dem zweiten Fahrzeug 3b, 3c der Abstand zwischen dem zweiten Fahrzeug 3b, 3c und dem ersten Fahrzeug 3a ermittelt, beispielsweise mit Hilfe von in die zweiten Fahrzeuge 3b, 3c integrierten Mikrocomputern. Der ermittelte Abstand wird mit einem vorbestimmten Grenzwert verglichen, der in dem zweiten Fahrzeug 3b, 3c gespeichert ist. Der Grenzwert ist so bemessen, dass bei einem Abstand, der größer ist als der Grenzwert oder genauso groß ist wie dieser, der Fahrer des ersten Fahrzeugs nicht geblendet wird, wenn das zweite Fahrzeug 3b, 3c das Fernlicht eingeschaltet hat

Es besteht auch die Möglichkeit, dass der Grenzwert in dem ersten Fahrzeug 3a gespeichert ist und zusammen mit dem Datensatz zu dem zweiten Fahrzeug 3b, 3c übertragen wird. Der Grenzwert kann in diesem Fall in dem ersten Fahrzeug 3a in Abhängigkeit von der Beleuchtungsstärke des von der Beleuchtungsanlage dieses Fahrzeugs 3a ausgesendeten Lichtbündels vorgegeben werden.

Wenn der Abstand kleiner ist als ein in dem betreffenden zweiten Fahrzeug 3b, 3c jeweils gespeicherter Grenzwert und das zweite Fahrzeug 3b, 3c außerdem das Fernlicht eingeschaltet hat, wird die Beleuchtungseinrichtung des zweiten Fahrzeugs 3b, 3c automatisch auf Abblendlicht umgeschaltet. Das Puls-Pausenverhöltnis der Impulse zum Ansteuern der mindestens einen Leuchtdiode 4 wird dazu entsprechend reduziert.

Wenn der Abstand nicht kleiner ist als der Grenzwert und das zweite Fahrzeug 3b, 3c dos Abblendlicht eingeschaltet hat, wird die Beleuchtungseinrichtung des zweiten Fahrzeugs 3b, 3c automatisch auf Fernlicht umgeschaltet, wenn der Fahrer des betreffenden Fahrzeugs 3b, 3c die automatische Umschaltung auf Fernlicht freigegeben hat. Anderenfalls erfolgt keine Umschaltung der Beleuchtungseinrichtung des zweiten Fahrzeug 3b, 3c. Der Fahrer kann die Umschaltung bei Bedarf auch manuell vornehmen. Bei der Umschaltung von Abblendlicht auf Fernlicht wird das Puls-Pausenverhöltnis der Impulse zum Ansteuern der mindestens einen Leuchtdiode 4 entsprechend vergrößert.

Wird bei der zyklischen Redundanzprüfung ein Fehler festgestellt, der nicht repariert werden kann, wird der empfange Datensatz verwofen. Das entsprechende zweite Fahrzeug 3b, 3c, in dem der Fehler festgestellt wurde, wartet dann ab, bis das erste Fahrzeug 3a und/oder ein anderes im Empfangsbereich des zweiten Fahrzeugs 3b, 3c befindliches Fahrzeug einen neuen Datensatz sendet. Dieser wird dann wie vorstehend beschrieben in dem zweiten Fahrzeug 3b, 3c verarbeitet.

In den zweiten Fahrzeugen 3b, 3c wird jeweils nachdem der Abstand bestimmt wurde, ein Antwort-Datensatz generiert, der einen von dem Abstand abhängigen Befehlscode, die Kennung des zweiten Fahrzeugs 3b und die zuvor von diesem empfangene Kennung des ersten Fahrzeugs 3a enthält. Der Antwort-Datensatz wird dann in entsprechender Weise über das von dem zweiten Fahrzeug 3b, 3c ausgesendete Lichtbündel redundant zum ersten Fahrzeug 3a übertragen. Der Befehlscode kann beispielsweise eine Anweisung an das erste Fahrzeug 3a enthalten, dass dieses von Fernlicht auf Abblendlicht umschalten soll. Wenn der Antwort-Datensatz fehlerfrei von dem ersten Fahrzeug 3a empfangen und dieses sein Fernlicht eingeschaltet hat, wird der Befehl ausgeführt.

Erwähnt werden soll noch, dass das vorstehend beschriebene Verfahren auch in umgekehrter Richtung durchgeführt werden kann, d.h. die Rollen des ersten Fahrzeugs 3a und die des zweiten Fahrzeugs 3b, 3c können auch vertauscht sein. Dabei können in beiden Richtungen gleichzeitig Datensätze übermittelt werden.

Ferner besteht die Möglichkeit, dass der Fahrer des Fahrzeugs 3a, 3b, 3c, 3d die automatische Umschaltung zwischen Fern- und Abblendlicht für sein Fahrzeug 3a, 3b, 3c, 3d deaktiviert und die Beleuchtungsanloge manuell auf Fern- oder Abblendlicht schaltet.

Die Übertragung der Datensätze zwischen den Fahrzeugen 3a, 3b, 3c, 3d erfolgt bei einander entgegenkommenden Fahrzeugen bevorzugt über die von den vorderen Scheinwerfern ausgesandten Lichtbündel 1a, 1b, 1c. Bei Fahrzeugen 3a, 3b, 3c, 3d, die hintereinander in dieselbe Richtung fahren, können die Datensätze auch über ein von einer Signalleuchte (z.B. Rücklicht, Bremslicht, Nebelschlusslicht) ausgesendetes Lichtbündel erfolgen. Dadurch ist es möglich, bei einem Fahrzeug 3a, 3b, 3c, 3d das Fernlicht automatisch abzuschalten, wenn sich das Fahrzeug 3a, 3b, 3c, 3d zu dicht an ein vorausfahrendes Fahrzeug 3a, 3b, 3c, 3d annähert.

## Patentansprüche

1. Verfahren zum Steuern der Beleuchtungsstärke eines von mindestens einer Fahrzeugbeleuchtungsanlage ausgesendeten Lichtbündels (1a, 1b, 1c), wobei von einem ersten Fahrzeug (3a) ein erstes Lichtbündel (1a) ausgesendet wird, in dessen Abstrahlbereich ein zweites Fahrzeug (3b, 3c) angeordnet ist, das mindestens ein zweites Lichtbündel (1b, 1c) aussendet, wobei in dem ersten Fahrzeug (3a) ein Positionswert für die Position des ersten Fahrzeugs (3a) und in dem zweiten Fahrzeug (3b, 3c) ein Positionswert für die Position des zweiten Fahrzeugs (3b, 3c) bereitgestellt werden, wobei ein Datensatz generiert wird, der zumindest den Positionswert des ersten Fahrzeugs (3a) umfasst, wobei der Datensatz von dem ersten Fahrzeug (3a) zu dem mindestens einen zweiten Fahrzeug (3b, 3c) übertragen wird, wobei in dem zweiten Fahrzeug (3b, 3c) aus dem Positionswert des ersten Fahrzeugs (3a) und dem Positionswert des zweiten Fahrzeugs (3b, 3c) der Abstand zwischen dem ersten Fahrzeug (3a) und dem zweiten Fahrzeug (3b, 3c) bestimmt wird, und wobei die Beleuchtungsstärke des mindestens einen Lichtbündels (1a, 1b, 1c) in Abhängigkeit von dem ermittelten Abstand eingestellt wird,
**dadurch gekennzeichnet, dass**
zum Übertragen des Datensatzes vom ersten Fahrzeug (3a) zum zweiten Fahrzeug (3b, 3c) das erste Lichtbündel (1a) entsprechend dem Datensatz moduliert wird, und dass das so erhaltene Modulationssignal von dem mindestens einen zweiten Fahrzeug (3b, 3c) empfangen und demoduliert wird, und
das Lichtbündel (1a, 1b, 1c) derart moduliert wird, dass die Modulation für das menschliche Auge nicht sichtbar ist, und
das Lichtbündel (1a, 1b, 1c) pulsphasenmoduliert wird.

2. Verfahren nach Anspruch 1, **dadurch gekennzeichnet, dass** eine von dem Positionswert des ersten Fahrzeugs (3a) abhängige Redundanzinformation erzeugt, in den Datensatz aufgenommen und zu dem zweiten Fahrzeug (3b, 3c) übertragen wird,
a) dass in dem zweiten Fahrzeug (3b, 3c) die Plausibilität des von diesem Fahrzeug empfangenen Datensatzes anhand der darin enthaltenen Redundanzinformation überprüft wird,
b) dass bei plausiblem Datensatz der Abstand zwischen dem ersten Fahrzeug (3a) und dem zweiten Fahrzeug (3b, 3c) bestimmt und die Beleuchtungsstärke des zweiten Lichtbündels (1b, 1c) in Abhängigkeit von dem ermittelten Abstand eingestellt wird, und
c) dass bei nicht plausiblem Datensatz die Übertragung des Datensatzes wiederholt oder in dem ersten Fahrzeug (3a) eine weiterer Datensatz erzeugt und zu dem betreffenden zweiten Fahrzeug (3b, 3c) übertragen wird, und wobei danach Schritt 2a) wiederholt und dann Schritt 2b) oder 2c) durchgeführt wird.

3. Verfahren nach Anspruch 1 oder Anspruch 2, **dadurch gekennzeichnet, dass** der Datensatz mittels eines Codemultiplexverfahrens zwischen den Fahrzeugen (3a, 3b, 3c) übertragen wird.

4. Verfahren nach einem der Ansprüche 1 bis 3, **dadurch gekennzeichnet, dass** in jedem Fahrzeug (3a, 3b, 3c) jeweils eine das Fahrzeug (3a, 3b, 3c) identifizierende Kennung gespeichert wird, dass die von den einzelnen Fahrzeugen (3a, 3b, 3c) ausgesendeten Datensätze jeweils die Kennung des den Datensatz sendenden Fahrzeugs enthalten, dass beim Empfangen eines Datensatzes die Kennung aus dem Datensatz extrahiert und mit der Kennung des den Datensatz empfangenden Fahrzeuges (3a, 3b, 3c) verglichen wird, und dass die Beleuchtungsstärke des Lichtbündels (1a, 1b, 1c) nur dann verändert wird, wenn die miteinander verglichenen Kennungen voneinander abweichen.

5. Verfahren nach einem der Ansprüche 1 bis 4, **dadurch gekennzeichnet, dass** in dem mindestens einen zweiten Fahrzeug (3b, 3c) nach dem Bestimmen des Abstands die Beleuchtungsstärke des Lichtbündels (1b, 1c) des zweiten Fahrzeugs (3b, 3c) in Abhängigkeit vom Abstand eingestellt und/oder ein Antwort-Datensatz generiert wird, der zumindest den Abstand und/oder einen von dem Abstand abhängigen Befehlscode umfasst, dass das erste Fahrzeug (3a) im Abstrahlbereich des zweiten Lichtbündels (1b, 1c) angeordnet ist und der Antwort-Datensatz von dem zweiten Fahrzeug (3b, 3c) zu dem ersten Fahrzeug (3a) übertragen wird, indem das zweite Lichtbündel (1b, 1c) entsprechend dem Antwort-Datensatz moduliert und das Modulationssignal von dem ersten Fahrzeug (3a) empfangen und demoduliert wird, und dass die Beleuchtungsstärke des ersten Lichtbündels (1a) in Abhängigkeit von dem ermittelten Abstand und/oder dem Befehlscode eingestellt wird.

6. Verfahren nach Anspruch 5, **dadurch gekennzeichnet, dass** in dem ersten Fahrzeug (3a) eine dieses identifizierende Kennung gespeichert wird, dass der vom ersten Fahrzeug (3a) an das mindestens eine zweite Fahrzeug (3b, 3c) übertragene Datensatz diese Kennung enthält, dass die Kennung in dem mindestens einen zweiten Fahrzeug (3b, 3c) aus dem empfangenen Datensatz extrahiert und in den Antwort-Datensatz übernommen wird, dass der Antwort-Datensatz danach an das erste Fahrzeug (3a) übertragen wird, dass die Kennung in dem ersten Fahrzeug (3a) aus dem Anhvort-Datensatz extrahiert und mit der Kennung des ersten Fahrzeugs (3a) verglichen wird, und dass bei einer Übereinstimmung der Kennungen die Beleuchtungsstärke des ersten Lichtbündels (1a) in Abhängigkeit von dem in dem Antwort-Datensatz enthaltenen Abstand und/oder Befehlscode eingestellt wird.

7. Verfahren nach einem der Ansprüche 1 bis 6, **dadurch gekennzeichnet, dass** in mindestens einem Fahrzeug (3a, 3b, 3c) die Zeitdauer gemessen wird, die vergangen ist seit das betreffende Fahrzeug (3a, 3b, 3c) zuletzt einen Datensatz empfangen hat, aufgrund dessen die die Beleuchtungsstärke des von diesem Fahrzeug (3a, 3b, 3c) ausgesendeten Lichtbündels auf einen Wert eingestellt wurde, der kleiner ist als ein Beleuchtungsstärke-Maximalwert, dass die gemessene Zeitdauer mit einer vorbestimmten Verzögerungszeit verglichen wird, und dass die Beleuchtungsstärke des Lichtbündels (1a, 1b, 1c) erhöht wird, wenn die Zeitdauer mit der Verzögerungszeit übereinstimmt oder größer ist als diese.

8. Verfahren nach einem der Ansprüche 1 bis 7, **dadurch gekennzeichnet, dass** das erste Lichtbündel (1a) auf Fernlicht eingestellt wird, wenn der Abstand größer ist als ein vorbestimmter Grenzwert, und dass das erste Licht- Bündel (1a) auf Abblendlicht eingestellt wird, wenn der Abstand kleiner ist als der vorbestimmte Grenzwert.

## Claims

1. Method of controlling the intensity of lighting of a light beam (1a, 1b, 1c) emitted by at least one vehicle lighting installation, wherein a first light beam (1a) is emitted by a first vehicle (3a), in the emission region of which beam a second vehicle (3b, 3c) is located and emits a second light beam (1b, 1c), wherein in the first vehicle (3a) a position value for the position of the first vehicle (3a) and in the second vehicle (3b, 3c) a position value for the position of the second vehicle (3b, 3c) are provided, wherein a data set is generated which comprises at least the position value of the first vehicle (3a), wherein the data set is transmitted by the first vehicle (3a) to the at least one second vehicle (3b, 3c), wherein in the second vehicle (3b, 3c) the spacing between the first vehicle (3a) and the second vehicle (3b, 3c) is determined from the position value of the first vehicle (3a) and the position value of the second vehicle (3b, 3c) and wherein the intensity of lighting of the least one light beam (1a, 1b, 1c) is set in dependence on the determined spacing, **characterised in that** for transmission of the data set from the first vehicle (3a) to the second vehicle (3b, 3c) the first light beam (1a) is modulated in correspondence with the data set and that the thus-obtained modulation signal is received and demodulated by the at least one second vehicle (3b, 3c), and the light beam (1a, 1b, 1c) is modulated in such a manner that the modulation is not visible to the human eye and the light beam (1a, 1b, 1c) is pulse-position modulated.

2. Method according to claim 1, **characterised in that** an item of redundancy information dependent on the position value of the first vehicle (3a) is generated, incorporated into the data set and transmitted to the second vehicle (3b, 3c),
a) that in the second vehicle (3b, 3c) the plausibility of the data set received by this first vehicle is checked on the basis of the item of redundancy information contained therein,
b) that in the case of a plausible data set the spacing between the first vehicle (3a) and the second vehicle (3b, 3c) is determined and the intensity of lighting of the second light beam (1b, 1c) is set in dependence on the determined spacing and
c) that in the case of a non-plausible data set the transmission of the data set is repeated or a further data set is generated in the first vehicle (3a) and transmitted to the relevant second vehicle (3b, 3c), after which step a) is repeated and then step b) or c) is carried out.

3. Method according to claim 1 or claim 2, **characterised in that** the data set is transmitted between the vehicles (3a, 3b, 3c) by means of a code multiplex method.

4. Method according to any one of claims 1 to 3, **characterised in that** in each vehicle (3a, 3b, 3c) a respective identification identifying the vehicle (3a, 3b, 3c) is stored, that the data sets transmitted by the individual vehicles (3a, 3b, 3c) each contain the identification of the vehicle transmitting the data set, that on reception of a data set the identification is extracted from the data set and compared with the identification of the vehicle (3a, 3b, 3c) receiving the data set and that the lighting intensity of the light beam (1a, 1b, 1c) is changed only if the compared identifications differ from one another.

5. Method according to any one of claims 1 to 4, **characterised in that** in the at least one second vehicle (3b, 3c) the lighting intensity of the light beam (1b, 1c) of the second vehicle (3b, 3c) is, after determination of the spacing, set in dependence on the spacing and/or a response data set is generated, which includes at least the spacing and/or a command code dependent on the spacing, that the first vehicle (3a) is present in the emission range of the second light beam (1b, 1c) and the response data set is transmitted from the second vehicle (3b, 3c) to the first vehicle (3a) **in that** the second light beam (1b, 1c) is modulated in correspondence with the response data set and the modulation signal is received and demodulated by the first vehicle (3a), and that the lighting intensity of the first light beam (1a) is set in dependence on the determined spacing and/or the command code.

6. Method according to claim 5, **characterised in that** in the first vehicle (3a) an identification identifying this is stored, that the data set transmitted from the first vehicle (3a) to the at least one second vehicle (3b, 3c) contains this identification, that the identification is extracted in the at least one second vehicle (3b, 3c) from the received data set and is taken over into the response data set, that the response data set is thereafter transmitted to the first vehicle (3a), that the identification is extracted in the first vehicle (3a) from the response data set and compared with the identification of the first vehicle (3a), and that in the case of correspondence of the identifications the lighting intensity of the first light beam (1a) is set in dependence on the spacing and/or command code contained in the response data set.

7. Method according to any one of claims 1 to 6, **characterised in that** measurement is carried out in at least one vehicle (3a, 3b, 3c) of the time period which has passed since the relevant vehicle (3a, 3b, 3c) last received a data set on the basis of which the lighting intensity of the light beam emitted by this vehicle (3a, 3b, 3c) was set to a value smaller than a lighting intensity maximum value, that the measured time period is compared with a predetermined delay time and that the lighting intensity of the light beam (1a, 1b, 1c) in increased if the time period corresponds with the delay time or is greater than this.

8. Method according to any one of claims 1 to 7, **characterised in that** the first light beam (1a) is set to high beam when the spacing is greater than a predetermined limit value and that the first light beam (1a) is set to dipped beam when the spacing is smaller than the predetermined limit value.

## Revendications

1. Procédé pour la commande de l'intensité lumineuse d'au moins un faisceau lumineux ( 1a, 1b, 1c) d'une installation d'éclairage d'un véhicule automobile, dans lequel un premier faisceau (1a) est émis par un premier véhicule (3a) dans la zone d'illumination duquel est situé un deuxième véhicule (3b, 3c) qui envoie au moins un deuxième faisceau lumineux (1b, 1c) selon lequel dans le premier véhicule (3a) est disponible une valeur de position sur la position du premier véhicule et dans le deuxième véhicule (3b, 3c) est disponible une valeur de position sur la position du deuxième véhicule (3b, 3c), selon lequel une ligne de données est générée qui contient au moins la valeur de position du premier véhicule (3a), selon lequel la ligne de données du premier véhicule (3a) est transférée vers l'au moins second véhicule (3b, 3c), selon lequel est déterminée dans le deuxième véhicule (3b, 3c) l'intervalle entre le premier véhicule (3a) et le deuxième véhicule (3b, 3c) à partir de la valeur de position du premier véhicule (3a) et la valeur de position du deuxième véhicule (3b, 3c) et selon lequel l'intensité lumineuse du au moins un faisceau de lumière (1 a, 1 b, 1 c) est réglée en fonction de l'intervalle détecté
**caractérisé en ce que**
afin de transmettre la ligne de données du premier véhicule (3a) au deuxième véhicule (3b, 3c) le premier faisceau lumineux (1a) est modulé selon la ligne de données correspondante et **en ce que** le signal de modulation ainsi obtenu est reçu et démodulé par l'au moins deuxième véhicule (3b, 3c)
et **en ce que**
le faisceau lumineux (1a, 1b, 1c) est modulé de façon que la modulation ne soit pas visible par l'oeil humain
et **en ce que**:
le faisceau lumineux (1a, 1b, 1c) est modulé par impulsions de position.

2. Procédé selon la revendication 1 **caractérisé en ce que** l'on génère une information redondante fonction de la valeur de position du premier véhicule (3a), qui est intégrée à la ligne de données et transmis au deuxième véhicule (3b, 3c) de façon que :
a) l'on vérifie dans le deuxième véhicule (3b, 3c) la vraisemblance de la ligne de données reçue par ce véhicule au moyen de l'information redondante qu'elle renferme,
b) l'intervalle entre le premier véhicule (3a) et le deuxième véhicule (3b, 3c) soit déterminé par la ligne vraisemblable de données, et que l'intensité lumineuse du deuxième faisceau (1 b, 1 c) soit réglée en fonction de l'intervalle détecté,
et
c) dans le cas d'une ligne non vraisemblable de données, la transmission de la ligne de données est répétée ou une nouvelle ligne de données est générée dans le premier véhicule (3a) et transmise au deuxième véhicule concerné (3b, 3c) et qu'ensuite l'étape 2a) est répétée et les étapes 2b) et 2c) sont effectuées.

3. Procédé selon la revendication 1 ou 2 **caractérisé en ce que** la ligne de données est transmise à l'aide d'un procédé de multiplexage codé entre les véhicules (3a, 3b, 3c).

4. Procédé selon les revendications 1 à 3 **caractérisé en ce qu'**à chaque fois on met en mémoire dans chaque véhicule (3a, 3b, 3c) le signe d'identification de chaque véhicule (3a, 3b, 3c), **en ce que** chaque ligne de données émise individuellement par un des véhicules (3a, 3b, 3c) contient à chaque fois l'identification du véhicule qui l'envoie, **en ce que** lors de la réception d'une ligne de données l'identification est extraite de la ligne de données et comparée à l'identification du véhicule (3a, 3b, 3c) ayant reçu la ligne de données et **en ce que** l'intensité lumineuse du faisceau de lumière (1a, 1 b, 1c) n'est modifiée que lorsque les identifications comparées l'une à l'autre sont différentes les unes des autres.

5. Procédé selon les revendications 1 à 4 **caractérisé en ce que** dans l'au moins un deuxième véhicule (3b, 3c) après la détermination de l'intervalle, l'intensité lumineuse du faisceau de lumière (1b, 1 c) du deuxième véhicule (3b, 3c) est réglée en fonction de l'intervalle et/ou on génère une ligne de données en réponse qui contient au moins l'intervalle et/ou un code de commande dépendant de l'intervalle **en ce que** le premier véhicule (3a) est situé dans la zone d'illumination du deuxième faisceau de lumière (1b, 1c) et **en ce que** la ligne de données en réponse provenant du deuxième véhicule (3b, 3c) est transmise au premier véhicule (3a), dans lequel le deuxième faisceau de lumière (1b, 1c) correspondant à la ligne de données en réponse est modulé et le signal de modulation du premier véhicule (3a) est reçu et démodulé et **en ce que** l'intensité lumineuse du premier faisceau de lumière (1a) est réglé en fonction de l'intervalle détecté et/ou du code de commande.

6. Procédé selon la revendication 5 **caractérisé en ce que** l'on met en mémoire dans le premier véhicule (3a) une caractéristique qui l'identifie, **en ce que** la ligne de données transmise du premier véhicule (3a) à l'au moins deuxième véhicule (3b, 3c) contient cette caractéristique, **en ce que** la caractéristique est extraite de la ligne de données reçue dans le au moins deuxième véhicule (3b, 3c) et reprise dans la ligne de données en réponse, **en ce que** la ligne de données en réponse est transmise ensuite au premier véhicule (3a), **en ce que** la caractéristique est extraite de la ligne de données en réponse dans le premier véhicule (3a) et comparée à la caractéristique du premier véhicule (3a) et **en ce que** par la concordance des caractéristiques , on règle l'intensité lumineuse du premier faisceau de lumière (1a) en fonction de l'intervalle et/ou du code de commande contenu dans la ligne de données en réponse.

7. Procédé selon les revendications 1 à 6 **caractérisé en ce que** l'on mesure dans au moins un véhicule (3a, 3b, 3c) la durée qui s'est écoulée depuis que le véhicule concerné (3a, 3b, 3c) a reçu en dernier une ligne de données, sur la base de laquelle l'intensité lumineuse du faisceau lumineux de ce véhicule (3a, 3b, 3c) a été réglée sur une valeur qui est inférieure à une valeur maximale et **en ce que** l'on compare la durée mesurée à une valeur prédéterminée de retard et **en ce que** l'intensité lumineuse du faisceau de lumière (1a, 1b, 1c) est augmentée lorsque la durée avec retard correspond ou est supérieure à celle-ci.

8. Procédé selon les revendications 1 à 7 **caractérisé en ce que** le premier faisceau lumineux (1a) est réglé en phare lorsque l'intervalle est supérieur à une valeur limite prédéterminée et **en ce que** le premier faisceau lumineux (1a) est réglé , en feux de croisement lorsque l'intervalle est inférieur à la valeur limite prédéterminée.
